(19) Europäisches Patentamt
European Patent Office
Office européen des brevets

(11) **EP 2 412 996 A1**

(12) **EUROPEAN PATENT APPLICATION**
published in accordance with Art. 153(4) EPC

(43) Date of publication:
**01.02.2012 Bulletin 2012/05**

(51) Int Cl.:
**F16D 13/62** (2006.01)

(21) Application number: **10808961.6**

(22) Date of filing: **10.05.2010**

(86) International application number:
**PCT/JP2010/057884**

(87) International publication number:
**WO 2011/141983 (17.11.2011 Gazette 2011/46)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(71) Applicant: **ACROSS CO., LTD.
Warabi-City,
Saitama-Prefecture 335-0005 (JP)**

(72) Inventors:
• **NAKAGAWA, Takao
  Warabi-shi, Saitama 335-0005 (JP)**

• **SATO, Hirotaka
  Warabi-shi, Saitama 335-0005 (JP)**
• **TORINOUMI, Akira
  Warabi-shi, Saitama 335-0005 (JP)**
• **MATSUMURA, Wataru
  Warabi-shi, Saitama 335-0005 (JP)**

(74) Representative: **Thum, Bernhard
  Wuesthoff & Wuesthoff
  Patent- und Rechtsanwälte
  Schweigerstrasse 2
  81541 München (DE)**

(54) **FRICTION CLUTCH**

(57) The purpose of this invention is to provide a friction-clutch system that uses a carbon/graphite material, such as a C/C composite material, and that can stably transmit power over the wide range of pressure on a friction surface, and a friction disk unit that can be used for the friction-clutch system.

The friction-clutch system of this invention has a friction disk unit comprising a central hub and friction disks, wherein the friction disks have a first friction surface facing a flywheel and a second friction surface facing a pressure plate,

wherein the flywheel has a third friction surface facing the first friction surface,

wherein the pressure plate has a fourth friction surface facing the second friction surface of the friction disks,

wherein at least one friction surface of the first to fourth friction surfaces is constituted of different materials, i.e., comprised of a combination of a carbon/graphite material and a metal/ceramics material,

wherein the carbon/graphite material forms a friction surface made from a carbon/graphite material, and a metal/ceramics material forms a friction surface made from a metal/ceramics material,

wherein the ratio of [the area of the friction surface made from the metal/ceramics material]/[the area of the friction surface made from the metal/ceramics material + the area of the friction surface made from the carbon/graphite material] ranges from 0.05~0.65, and

wherein pressure between the first and the third friction surface and between the second and the fourth friction surface is 10~250 N/cm$^2$ while the power is being transmitted.

Fig. 4

**Description**

Technical Field

This invention relates to a friction-clutch system for transmitting a force from a driving shaft to a driven shaft. Particularly, this invention relates to a friction-clutch system used for motor vehicles, which have an engine, such as four-wheeled vehicles and two-wheeled vehicles (motorcycles).

Background of the Invention

Clutch systems are used in motor vehicles for connecting and disconnecting the power from a power source, such as engines of motor vehicles, by means of mechanical contact of friction materials. The friction-clutch system may transmit power by means of a friction force generated between two surfaces of the friction materials. The power can be disconnected by separating the two surfaces of the friction materials. The friction-clutch system is frequently used for motor vehicles (four-wheeled and two-wheeled vehicles), because the friction-clutch system can smoothly connect and disconnect the source of power.

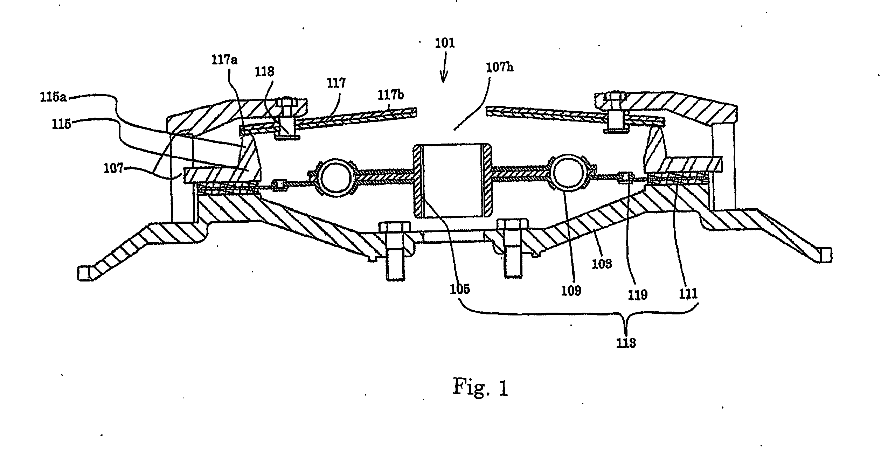

Fig. 1 shows a sectional view of a conventional friction-clutch system that is used for four-wheeled vehicles (it shows a sectional plane that includes an axis of a central hub).
By referring to Fig. 1, below the conventional friction-clutch system 101 is explained.
Incidentally, to facilitate understanding of the system 101, a release bearing, a release arm, etc., are omitted in Fig. 1. The conventional friction-clutch system 101 comprises a clutch cover 107, a flywheel 103 connected to an output shaft (a crankshaft) of an engine, a friction disk unit 113, a pressure plate 115, and a diaphragm spring 117.

The friction disk unit 113 comprises a central hub 105 (in which a main shaft [not shown] of a transmission is inserted. The central hub 105 includes torsion springs 109), a friction disk 111, and rivets 119 for connecting the friction disk 111 to the central hub 105.

The clutch cover 107 comprises a case, which has a cylindrical shape with a lid and without a bottom plate (namely, its lower surface is opened and its upper surface is closed by a lid that has a central opening 107h). The central opening 107h has a circular shape, and its center is located on the central axis of the cylindrical case. The diaphragm spring 117, which has a plurality of reed-shaped elements, is disposed around the central opening 107h. (Each reed-shaped element of the diaphragm spring 117 is fixed to the lid by means of a screw 118 so that the reed-shaped element can rotate about the axis of the screw 118 within a predetermined angle.)

By pushing the protruding portion 115a of the pressure plate 115 by means of the outer end 117a of the diaphragm spring 117, the pressure plate 115 is pressed toward the flywheel 103. Thus, the spring force generated by the diaphragm spring 117 presses the friction disk 111 toward the flywheel 103. Consequently, the power is transmitted from the flywheel 103 to the friction disk 111. Namely, this state means that the clutch is "ON," in which state the power is transmitted from the flywheel 103 to the central hub 105 through the friction disk 111 and the rivets 119.

Clutch facings are attached to both sides of the portion of the friction disk 111 that contacts the flywheel 103 and the pressure plate 115, to transmit the power from the flywheel 103 to the central hub 105 without slipping.

The inner end 117b of the diaphragm spring 117 contacts a release bearing (not shown). The inner end 117b of the diaphragm spring 117 is moved toward the flywheel 103 by moving the release bearing toward the flywheel 103 by means of the release arm (not shown). Thus, the outer end 117a of the diaphragm spring 117 separates from the protruding portion 115a of the pressure plate 115. Consequently, the spring force, which presses the pressure plate 115 toward the friction disk 111 so that the friction disk 111 presses the flywheel 103, is eliminated.

Thus, since the friction disk 111 is not pressed toward the flywheel 103, no power is transmitted from the flywheel 103 to the friction disk 111. Namely, this state means that the clutch is "OFF," in which state no power is transmitted from the flywheel 103 to the central hub 105.

For such a friction-clutch system, it is required that the size of the system be compact, and that great power can be transmitted. Particularly, for the friction-clutch system used for motor vehicles, since it is required to maximize the space in the vehicles and to reduce their weight, it tends to be required that the size of the friction-clutch system be compact, and that great power can be transmitted. The tendency requires that the stable transmission of the power can be achieved within a wide range of the operation of the friction-clutch system, such as the range from a low temperature to a high temperature, the range from low speed to high speed, and the range from a low power to a high power. To achieve the requirements, efforts by trial and error have been carried out.
It has been considered to improve the performance of the material of the friction disk 111, which contacts the flywheel 103 and the pressure plate 115, so that high power can be transmitted at a high temperature and a high speed.

Particularly, since the friction-clutch system used for motor vehicles for racing is used under hard conditions, the system must be able to transmit high power at a high temperature and a high speed.

To provide such a friction-clutch system that can transmit high power at a high temperature and a high speed, there is available a friction-clutch system that has its friction disks made from a carbon fiber carbon composite material (see Patent Document 1).

The coefficient of friction of the carbon fiber carbon composite material tends to increase as the temperature of its surface increases.

Thus, by applying the carbon fiber reinforced carbon composite material ("C/C composite material") to the friction disks, the friction-clutch system can transmit high power at a high temperature and a high speed. Since the weight and inertia moment is reduced, the friction disks can easily respond to any change of the rate of the rotation.

Further, when a carbon/graphite material, like the carbon fiber carbon composite material, is used for the friction disks, since the coefficient of friction of the carbon fiber carbon composite material decreases at a low temperature, it becomes a problem in that the friction-clutch system cannot transmit enough power at a low temperature. To solve this problem, friction disks that are made of different materials, such as a combination of a carbon/graphite material and a metal/ceramics material, are used for the friction-clutch system (see Patent Document 2).

Patent Document 1: Japanese Patent Laid-open Publication No. 2002-181072
Patent Document 2: Japanese Patent Laid-open Publication No. 2009-97690

Disclosures of Invention

However, if a carbon/graphite material, such as a C/C composite material, is used for the friction disks, a problem such that the coefficient of friction of the friction disks is reduced at a low temperature, cannot be solved. Further, even if such different materials made from a combination of a carbon/graphite material and a metal/ceramics material are used for the friction disks, a friction-clutch system having an excellent performance cannot necessarily be provided. Thus, it has been required to provide a friction-clutch system that can stably transmit a torque over the wide range of pressure on a friction surface while maintaining a high coefficient of friction, and reducing wear.

This invention was conceived in the circumstances explained in the above paragraphs. Namely, the purpose of this invention is to provide a friction-clutch system that uses a carbon/graphite material, such as a C/C composite material, and that can stably transmit power over the wide range of pressure on a friction surface, and a friction disk unit that can be used for the friction-clutch system.

To solve the problem explained in the above paragraphs, the first aspect of the invention has the following constitution:

a friction-clutch system comprising:
a flywheel rotated by an inputted power,
a clutch cover attached to the flywheel, and
a friction disk unit rotated together with the flywheel by being pressed toward the flywheel,
wherein the clutch cover comprises a pressure plate for pressing the friction disk unit toward the flywheel and a spring for forcing the pressure plate against the friction disk unit,
wherein the friction disk unit comprises a central hub for outputting the power transmitted from the flywheel and for being connected to the central portion of the friction disk unit, and friction disks for transmitting the rotational power by friction force and for being sandwiched between the flywheel and the pressure plate,
wherein the friction disks have a first friction surface facing the flywheel and a second friction surface facing the pressure plate,
wherein the flywheel has a third friction surface facing the first friction surface of the friction disks,
wherein the pressure plate has a fourth friction surface facing the second friction surface of the friction disks,
wherein at least one friction surface of the first to fourth friction surfaces is constituted of different materials, i.e., comprised of a combination of a carbon/graphite material and a metal/ceramics material,
wherein the carbon/graphite material forms a friction surface made from a carbon/graphite material, and a metal/ceramics material forms a friction surface made from a metal/ceramics material,
wherein the ratio of [the area of the friction surface made from the metal/ceramics material]/[the area of the friction surface made from the metal/ceramics material+ the area of the friction surface made from the carbon/graphite material] ranges from 0.05~0.65, and
wherein the pressure between the first and the third friction surface and between the second and the fourth friction surface is 10~250 N/cm$^2$ while the power is being transmitted.

The second aspect of the invention has the following constitution:

The friction-clutch system of the first aspect of the invention,
wherein the ratio of [the area of the friction surface made from the metal/ceramics] / [the area of the friction surface made from the metal/ceramics + the area of the friction surface made from the carbon/graphite] ranges from 0.05~0.40, and
wherein the pressure between the first and the third friction surface and between the second and the fourth friction surface is 10~200 N/cm$^2$ while the power is being transmitted.

The third aspect of the invention has the following constitution:

The friction-clutch system of either the first or the second aspect of the invention,
wherein the first and the second friction surface is constituted of different materials, i.e., comprised of a combination of a carbon/graphite material and a metal/ceramics material,
wherein the carbon/graphite material forms a friction surface made from a carbon/graphite material, and the metal/ceramics material forms a friction surface made from a metal/ceramics material.

The fourth aspect of the invention has the following constitution:

The friction-clutch system of any one of the first to the third aspect of the invention,
wherein the carbon/graphite material is a C/C composite material.

The fifth aspect of the invention has the following constitution:

The friction-clutch system of any one of the first to the fourth aspect of the invention,
wherein the metal/ceramics material is a metal material selected from steel, brass, copper, aluminum, titanium, molybdenum, tungsten, tantalum, and alloys thereof, or a ceramics material selected from alumina, mullite, cordierite, zirconia, titanium oxide, silicon nitride, titanium nitride, aluminum nitride, silicon carbide, boron carbide, tungsten carbide, titanium boride, and sialon.

The sixth aspect of the invention has the following constitution:

The friction-clutch system of any one of the first to the fifth aspect of the invention,
wherein the friction disks comprise a first friction plate, which forms the first friction surface, a second friction plate, which forms the second friction surface, and a central plate for fixing the first and the second friction plate.

The seventh aspect of the invention has the following constitution:

The friction-clutch system of the sixth aspect of the invention,
wherein the first and the second friction plate and the central plate all have an annular shape,
wherein the first and the second friction plate are mechanically fixed to the central plate.

The eighth aspect of the invention has the following constitution:

The friction-clutch system of the seventh aspect of the invention,
wherein each of the first and the second friction plate and the central plate comprises a plurality of circumferentially-segmented plates.

The ninth aspect of the invention has the following constitution:

The friction-clutch system of any one of the sixth, the seventh, and the eighth aspect of the invention,
wherein the first friction plate and the second friction plate are made from the carbon/graphite material, which forms a friction surface made from a carbon/graphite material, and
wherein fasteners for mechanically fixing the first and the second friction plate to the central plate are made from a metal/ceramics material, which forms a friction surface made from a metal/ceramics material.

The tenth aspect of the invention has the following constitution:

The friction-clutch system of any one of the first to the ninth aspect of the invention,
wherein the friction surface made from a carbon/graphite material and the friction surface made from a metal/ceramics material form one plane.

The eleventh aspect of the invention has the following constitution:

A friction disk unit comprising the following:
a central hub for outputting the power transmitted from a flywheel and for being connected to the central portion of the friction disk unit, and friction disks for transmitting the rotational power by friction force,
wherein the friction disks have a first friction surface and a second friction surface,
wherein at least one friction surface of the first and the second friction surface is constituted of different materials, i.e., comprised of a combination of a carbon/graphite material and a metal/ceramics material,
wherein the carbon/graphite material forms a friction surface made from a carbon/graphite material, and a metal/ceramics material forms a friction surface made from a metal/ceramics material,
wherein the ratio of [the area of the friction surface made from the metal/ceramics material]/[the area of the friction surface made from the metal/ceramics material + the area of the friction surface made from the carbon/graphite material] ranges from 0.05~0.65.

The twelfth aspect of the invention has the following constitution:

The friction disk unit of the eleventh aspect of the invention,
wherein the ratio of [the area of the friction surface made from the metal/ceramics material]/[the area of the friction surface made from the metal/ceramics material + the area of the friction surface made from the carbon/graphite material] ranges from 0.05~0.40.

The thirteenth aspect of the invention has the following constitution:

The friction disk unit of either the eleventh or twelfth aspect of the invention,
wherein the carbon/graphite material is a C/C composite material.

The fourteenth aspect of the invention has the following constitution:

The friction disk unit of any one of the eleventh, the twelfth, and the thirteenth aspect of the invention,
wherein the metal/ceramics material is a metal material selected from steel, brass, copper, aluminum, titanium, molybdenum, tungsten, tantalum, and alloys thereof, or a ceramics material selected from alumina, mullite, cordierite, zirconia, titanium oxide, silicon nitride, titanium nitride, aluminum nitride, silicon carbide, boron carbide, tungsten carbide, titanium boride, and sialon.

The fifteenth aspect of the invention has the following constitution:

The friction disk unit of any one of the eleventh to the fourteenth aspect of the invention,
wherein the friction disk comprises a first friction plate, which forms the first friction surface, a second friction plate, which forms the second friction surface, and a central plate for fixing the first and the second friction plate.

The sixteenth aspect of the invention has the following constitution:

The friction disk unit of the fifteenth aspect of the invention,
wherein the first and the second friction plate and the central plate all have an annular shape,
wherein the first and the second friction plate are mechanically fixed to the central plate.

The seventeenth aspect of the invention has the following constitution:

The friction disk unit of the sixteenth aspect of the invention,
wherein each of the first and the second friction plate and the central plate comprises a plurality of circumferentially-segmented plates.

The eighteenth aspect of the invention has the following constitution:

The friction disk unit of any one of the fifteenth to the seventeenth aspect of the invention,
wherein the first friction plate and the second friction plate are made from the carbon/graphite material, which forms a friction surface made from a carbon/graphite material, and
wherein fasteners for mechanically fixing the first and the second friction plate to the central plate are made from the metal/ceramics material, which forms a friction surface made from a metal/ceramics material.

The nineteenth aspect of the invention has the following constitution:

The friction disk unit of any one of the eleventh to the eighteenth aspect of the invention,
wherein the friction surface made from a carbon/graphite material and the friction surface made from a metal/ceramics material form one plane.

Effects of the Inventions

As explained in the above paragraphs, the friction-clutch system and the friction disk unit of the present inventions have the following technical features:

At least one of the friction surfaces of the friction-clutch system and the friction disk unit is constituted of different materials, and are comprised of a combination of a carbon/graphite material (for example, a C/C composite material) and a metal/ceramics material, and
the ratio of [the area of the friction surface made from the metal/ceramics material]/[the area of the friction surface made from the metal/ceramics material + the area of the friction surface made from the carbon/graphite material] ranges within a predetermined scope.

Consequently, it becomes possible to provide a friction-clutch system and a friction disk unit that can achieve a high coefficient of friction over the wide range of pressure on the friction surface of the friction disks while reducing wear, and that can stably transmit a torque.

Brief Descriptions of the Drawings

[Fig. 1] Fig. 1 shows a sectional view of a conventional friction-clutch system (Prior Art).
[Fig. 2] Fig. 2 shows a sectional view of the friction-clutch system of the present invention.
[Fig. 3] Fig. 3 shows an enlarged sectional view of the friction disk of the friction-clutch system of the present invention (part A of Fig. 2).
[Fig. 4] Fig. 4 shows an elevational view of one embodiment of the friction disk unit of the present invention.
[Fig. 5] Fig. 5 shows an elevational view of another embodiment of the friction disk unit of the present invention.

Fig. 5-2 shows an elevational view of yet another embodiment of the friction disk unit of the present invention.
Fig. 5-3 shows an elevational view of yet another embodiment of the friction disk unit of the present invention.

[Fig. 6] Fig. 6 shows an enlarged sectional view of the friction disk to explain another embodiment for fixing a friction plate to a central plate.

Preferred Embodiments of the Invention

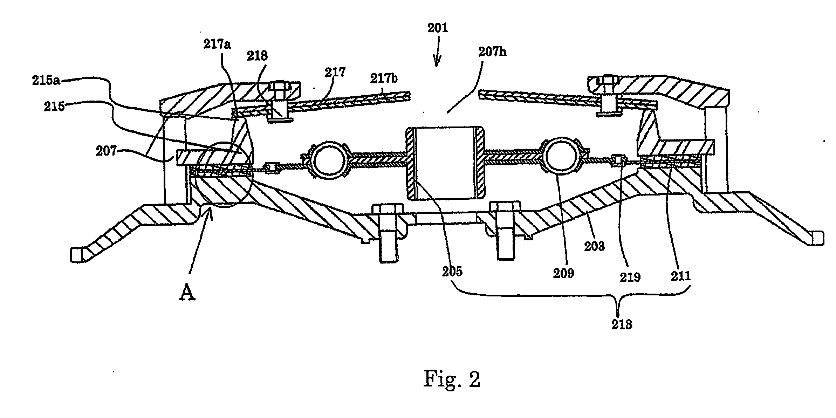

Below, the preferred embodiments of the invention are explained by referring to the figures. The preferred embodiments explained below are just for exemplifying the invention. Thus, are not intended to limit the scope of the invention.
For this specification, the wording "a carbon/graphite material" means "a material comprising a carbon material or a graphite material," and the wording "a metal/ceramics material" means "a material comprising a metal material or a ceramics material."
Fig. 2 shows a sectional view of the friction-clutch system of the present invention, which view indicates a plane cut so as to contain the center of the axis of the central hub. To facilitate understanding of the invention, a release bearing, a release arm, etc., are omitted in Fig. 2.
The friction-clutch system 201 of this invention comprises a clutch cover 207, a flywheel 203 connected to an output shaft (a crankshaft) of an engine, a friction disk unit 213, a pressure plate 215, and a diaphragm spring 217.
The friction disk unit 213 comprises a central hub 205 (in which a main shaft [not shown] of a transmission is inserted, and which includes torsion springs 209), a friction disk 211, and rivets 219 for connecting the friction disk 211 to the central hub 205.
The clutch cover 207 comprises a case, which has a cylindrical shape with a lid and without a bottom plate (namely, its lower surface is opened and its upper surface is closed by a lid that has a central opening 207h). The central opening 207h has a circular shape, and its center is located on the central axis of the cylindrical case. A diaphragm spring 217, which has a plurality of reed-shaped elements, is disposed around the central opening 207h. (Each reed-shaped element of the diaphragm spring 217 is fixed to the lid by means of a screw 218 so that the reed-shaped element can rotate about the axis of the screw 218 within a predetermined angle.)

By pushing the protruding portion 215a of the pressure plate 215 by means of the outer end 217a of the diaphragm spring 217, the pressure plate 215 is pressed toward the flywheel 203. Thus, the spring force generated by the diaphragm spring 217 presses the friction disk 211 toward the flywheel 203. Consequently, the power is transmitted from the flywheel 203 to the friction disk 211. Namely, this state means that the clutch is "ON," in which state the power is transmitted from the flywheel 203 to the central hub 205 through the friction disk 211 and the rivets 219.

The inner end 217b of the diaphragm spring 217 contacts a release bearing (not shown). The inner end 217b of the diaphragm spring 217 is moved toward the flywheel 203 by moving the release bearing toward the flywheel 203 by means of the release arm (not shown). Thus, the outer end 217a of the diaphragm spring 217 separates from the protruding portion 215a of the pressure plate 215. Consequently, the spring force, which presses the pressure plate 215 toward the friction disk 211 so that the friction disk 211 presses the flywheel 203, is eliminated.

Thus, since the friction disk 211 is not pressed toward the flywheel 203, the power is not transmitted from the flywheel 203 to the friction disk 211. Namely, this state means that the clutch is "OFF," in which state the power is not transmitted from the flywheel 203 to the central hub 205.

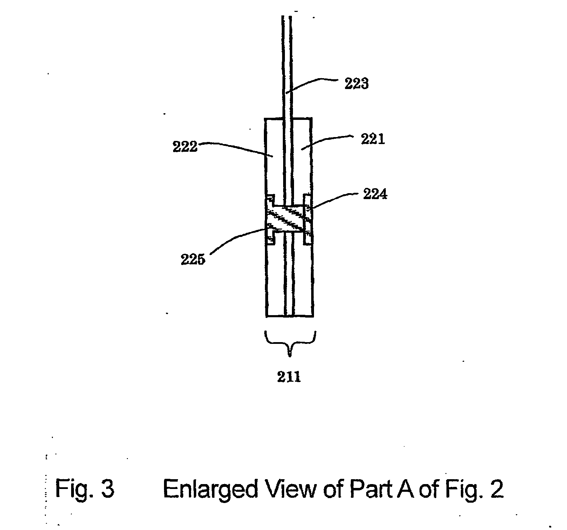

Fig. 3 shows an enlarged sectional view of the part (part A) of the friction disk 211 of the friction-clutch system 201 of Fig. 2.

For the embodiments shown in Figs. 2 and 3, the friction disk 211 comprises a first friction plate 221, a second friction plate 222, a central plate 223, a first friction bush 224, and a second friction bush 225, which bushes act as the mechanical fasteners.

The first friction plate 221 and the first friction bush 224 form a first friction surface. The second friction plate 222 and the second friction bush 225 form a second friction surface. These friction surfaces define the performance of the friction-clutch system 201.

The first friction plate 221 and the second friction plate 222, and the first friction bush 224 and the second friction bush 225, may be made from different materials. Namely, the first friction plate 221 and the second friction plate 222 may be made from a carbon/graphite material, and the first friction bush 224 and the second friction bush 225 may be made from a metal/ceramics material. Further, the first friction plate 221 and the second friction plate 222 may be made from a metal/ceramics material, and the first friction bush 224 and the second friction bush 225 may be made from a carbon/graphite material.

The surface of the first friction plate 221 and that of the first friction bush 224, and the surface of the second friction plate 222 and that of the second friction bush 225, form one plane, so that the surface of the first friction plate 221 and that of the first friction bush 224, and the surface of the second friction plate 222 and that of the second friction bush 225, form one of the friction surfaces.

Fig. 3 shows one of the embodiments of the friction disk 211. It has a friction surface that is constituted of different materials, i.e., comprised of a friction plate and a friction bush that are made from a carbon/graphite material and a metal/ceramics material, respectively.

For this embodiment, since the friction plate is made from the carbon/graphite material, and the friction bush is made from the metal/ceramics material, the friction plate forms the friction surface made from a carbon/graphite material, and the friction bush forms the friction surface made from a metal/ceramics material.

The friction bush is implanted in the friction plate. The friction bush may be mechanically and directly fastened to the friction plate. Otherwise, for example, the first friction bush 224, having a female thread, and the second friction bush 225, having a male thread, may be inserted into and fitted in a through hole disposed in the first friction plate 221, the second friction plate 222, and the central plate 223, and then may be screwed to each other, so as to fix the first friction plate 221 and the second friction plate 222 to the central plate 223.

For the embodiment explained in the above paragraphs, the first and the second friction plate 221, 222 are made from a carbon/graphite material, and the first and the second friction bush 224, 225 are made from a metal/ceramics material. However, the materials of these parts are not limited to them. The first and the second friction plate 221, 222 may be made from a metal/ceramics material, and the first and the second friction bush 224, 225 may be made from a carbon/graphite material.

The shapes and sizes of the friction surface made from a carbon/ graphite material and the friction surface made from a metal/ceramics material, which are comprised of the friction plates and the friction bushes, are not limited to specific values.

Any widely-used industrial carbon material, any polycrystalline graphite, and any pyrolytic graphite, may all be used for the carbon/graphite material, which constitutes the friction surface made from a carbon/graphite material. Further, a C/C composite (Carbon Fiber Carbon Composite) material, which is a composite material reinforced by a carbon fiber, may be used for the carbon/graphite material. The C/C composite material is preferable for the carbon/graphite material because of its excellent strength and wear resistance. The C/C composite material is composed of carbon fibers or graphite fibers, which act as reinforcing fibers, and a carbon material or a graphite material, which acts as a matrix. Many kinds of C/C composite materials can be used for a friction-clutch system. For example, the C/C composite material that is made by alternately repeating a processing step for impregnating a pitch into a substrate and a processing step for carbonizing and graphitizing the substrate by heat treating it, can be used for the friction-clutch system. Further, the C/C composite material that is made by densifying a substrate that is formed by carbon fibers or graphite fibers sterically placed by means of a chemical vapor deposition process can be used for the friction-clutch system.

For the C/C composite material used for the friction-clutch system, the following materials may be included in the C/C composite material: titanium, silicon, iron, tungsten, molybdenum, copper, aluminum, tin, lead, zinc, magnesium, steel alloys, copper alloys, aluminum alloys, titanium alloys, alumina, mullite, cordierite, zirconia, titanium oxide, silicon nitride, aluminum nitride, silicon carbide, titanium carbide, boron carbide, tungsten carbide, titanium boride, magnesium oxide, iron oxide, zinc oxide, chromium oxide, calcium carbonate, barium sulfate, etc.

The following materials may be used for the metal/ceramics material, which forms the friction surface made from a metal/ceramics material: steel, such as chrome molybdenum steel (SCM), brass, copper, aluminum, titanium, molybdenum, tungsten, tantalum, and any alloy that includes these materials, as a metal material, or alumina, mullite, cordierite, zirconia, titanium oxide, silicon nitride, titanium nitride, aluminum nitride, silicon carbide, titanium carbide, boron carbide, tungsten carbide, titanium boride, and sialon, as a ceramics material.

As explained in the above paragraphs, when the first and the second friction surface is constituted of different materials that are comprised of a combination of a carbon/graphite material and a metal/ceramics material, the third friction surface (the friction surface of the flywheel) and the fourth friction surface (the friction surface of the pressure plate) may be made from a metal material or a ceramics material as explained in the above paragraph.

Generally, for the friction surface formed by a C/C composite material, the coefficient of friction of the friction surface tends to increase as the temperature of its surface increases. Thus, when the temperature of the friction surface formed by the C/C composite material is relatively low, since the coefficient of friction of the friction surface is also low, no high power can be transmitted.

When the first and the second friction plate are made from the C/C composite material, and the first and the second friction bush are made from the metal/ceramics material, and when the temperature of the friction surface is low, a stable torque can be transmitted based on the friction between the surface of the metal/ceramics material and the surface of the metal/ceramics material. When the temperature of the friction surface becomes high, high power can be transmitted because of the high coefficient of the friction of the C/C composite material (or the carbon/graphite material).

Namely, the friction-clutch system that is constituted of the friction surfaces made by the materials explained in the above paragraphs can compensate for the defect (this means that when the temperature of the friction surface is low, high power cannot be transmitted) of the C/C composite material (or the carbon/graphite material).

' However, based on recent research on friction-clutch systems, it becomes clear that the friction-clutch system that is constituted of the friction surfaces made by the materials explained in the above paragraphs does not always have a high performance. Below this point is explained in detail.

In this embodiment, the following is explained. Namely, the first and the second friction surface are comprised of a combination of the C/C composite material (the carbon/graphite material) and the metal/ceramics material. However, the configuration of the first and the second friction surface is not limited to such a one. For at least one friction surface of the first and the second friction disk, which are the friction surfaces of the friction disks, the third friction surface, which is the friction surface of the flywheel and faces the friction disk, and the fourth friction surface, which is the friction surface of the pressure plate and faces the friction disk, the friction surfaces made from the combination of the C/C composite material (the carbon/graphite material) and the metal/ceramics material may be used.

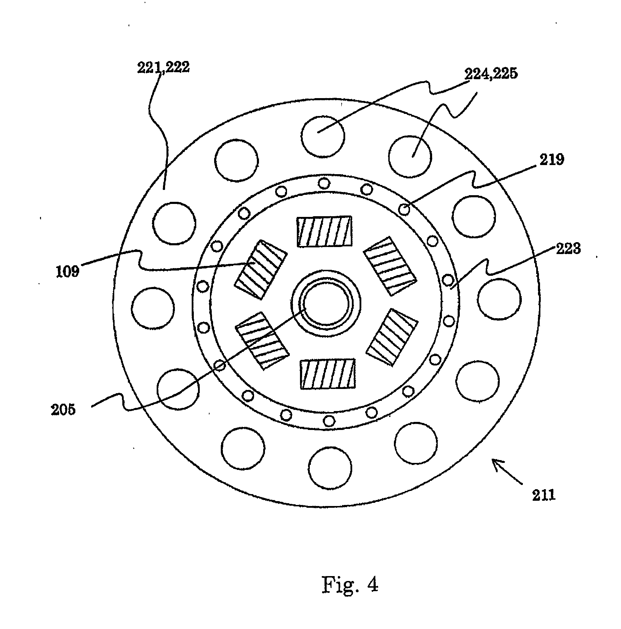

Fig. 4 shows an elevational view of the friction disk unit 213 of Figs. 2 and 3. In this embodiment, a friction disk 211 has a circular ring shape. It is mechanically fixed to a central hub 205 by means of a central plate 223 of the friction disk 211. A plurality of rivets 219 are used for mechanically fixing the central plate 223 to the central hub 205. However, a plurality of screws, or welding, also may be used for mechanically fixing them.

In this embodiment, the friction disk 211 and the central hub 205 of the friction disk unit 213 are made separately and then are mechanically assembled. However, the friction disk 211 of the friction disk unit 213 and the central hub 205 may be made integrally.

For the embodiment shown in Fig. 4, a plurality of friction bushes are disposed on a circle at even intervals. However, it is not necessary that they be disposed on a circle at even intervals.

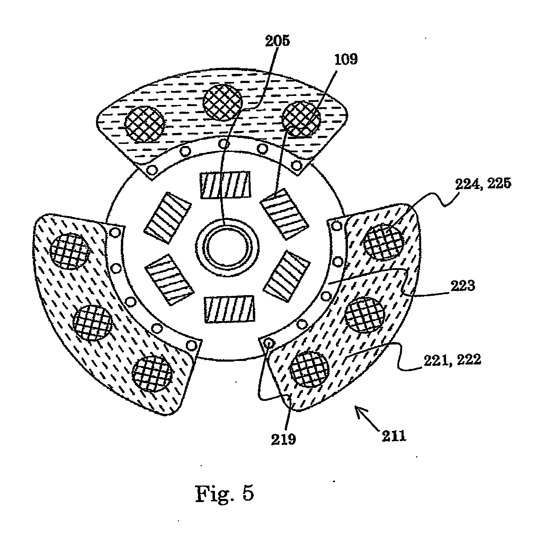

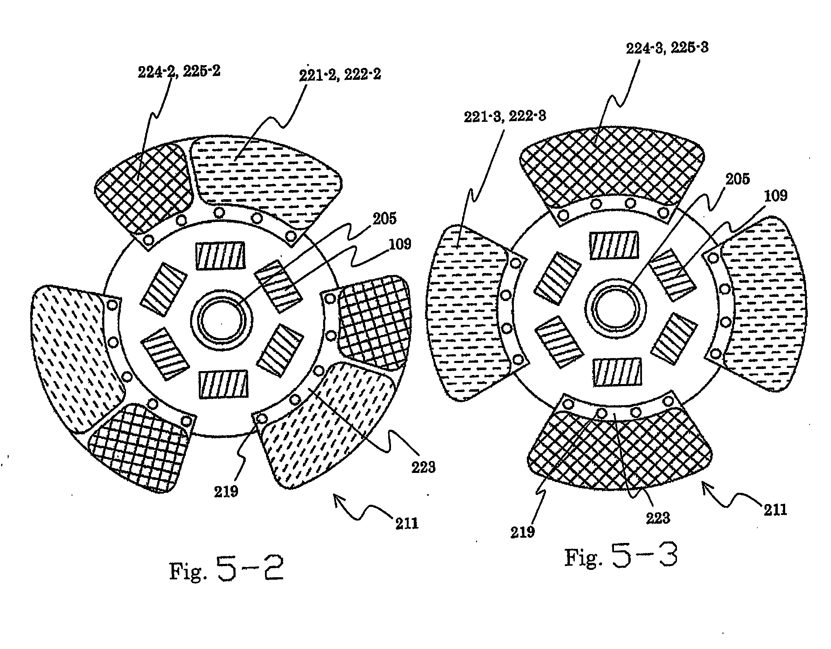

Fig. 5 shows an elevational view of the friction disk unit 213 of another embodiment. In this embodiment, the friction disks 211 have a sector-form shape that is made by cutting a friction disk 211 having a circular ring shape in the circumferential direction. The friction disks 211 are made by mechanically fixing a plurality of friction disks 211 to the central hub 205 by means of the central plates 223, which all have a sector-form shape. For the embodiment of the friction disk unit 213 shown in Fig. 5, the central plate 223 is mechanically fixed to the central hub 205 by a plurality of rivets 219 in the same fashion as that shown in Fig. 4. However, the central plate 223 may be mechanically fixed to the central hub 205 by screws or welding.

For this embodiment, the friction disk 211 and the central hub 205 of the friction disk unit 213 are also made separately and then are mechanically assembled. However, the central hub 205 and the central plate 223 of the friction disk 211, which has a sector-form shape, may be made integrally.

When the first friction plate 221 and the second friction plate 222 have a circular ring or a sector-form shape, since the amount of the C/C composite material, which is very expensive, can be reduced, it is possible to reduce the cost for producing the friction disk unit 213. When the first friction plate 221 and the second friction plate 222 have a sector-form shape, since these friction plates can be efficiently cut out from a large plate, it is possible to further reduce the cost for producing the friction disk unit 213.

In the above paragraphs, the method for fixing the first and the second friction plates 221, 222 to the central plate 223 is explained as follows. Namely, first, a male and a female threaded portion are formed on the first and the second friction bush 224, 225, respectively. Then, the first and the second friction bush 224, 225 are inserted into through holes, which holes are disposed at the first and the second friction plates 221, 222 and the central plate 223. Next, the second friction plates 221, 222 are fixed to the central plate 223 by engaging the first and the second friction bush 224, 225, and by screwing them together.

However, the method for fixing the first and the second friction plates 221, 222 to the central plate 223 is not limited to such a way.

Below, another embodiment of the method for forming the first and the second friction surfaces of the friction disk unit 213, which surfaces are constituted of different materials, i.e., comprised of a combination of a C/C composite material (or a carbon/graphite material) and a metal/ceramics material, is explained.

Namely, the first friction plate 221 and the first friction bush 224, and the second friction plate 222 and the second friction bush 225, may be located as shown, and may have the shape as shown, by the denotations 221-2, 224-2, 222-2, and 225-2 of Fig. 5-2. Further, they may be located as shown, and may have the shape as shown, by the denotations 221-3, 224-3, 222-3, and 225-3 of Fig. 5-3.

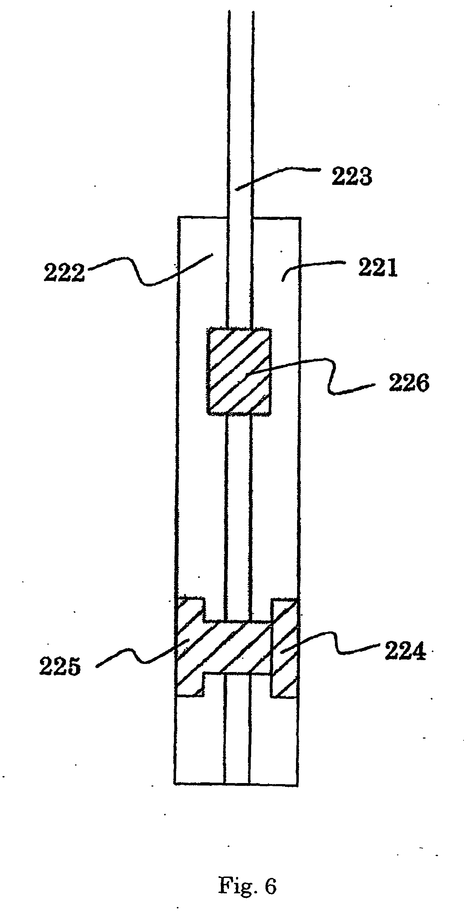

Further, as shown in Fig. 6, in addition to the first and the second friction bush 224, 225, shearing pins 226 can be used for firmly fixing the first and the second friction plates 221, 222 to the central plate 223. For this case, the force caused by screwing the first and the second friction bush 224, 225 acts to press the first and the second friction plates 221, 222 against the central plate 223 at a predetermined pressure. The shearing pins 226 are tightly inserted into the through holes disposed at the central plate 223. The hollows, which fit the shearing pins 226, are machined on the first and the second friction plates 221, 222. Then, the first and the second friction plates 221, 222 and the central plate 223 are assembled by inserting the shearing pins 226 into the hollows. This structure allows the shearing pins 226 to transfer the friction force generated between the first and the second friction plates 221, 222 and the central plate 223 when the friction disk unit 213 transmits power.

As explained in the above paragraphs, by applying the method for fixing the first and the second friction plates 221, 222 to the central plate 223, the friction disk unit 213 can definitely transmit the power.

As previously mentioned, even if the method for fixing the first and the second friction plates 221, 222 to the central plate 223, which method is explained in the above paragraphs, is applied to the friction disk unit 213, the friction-clutch system 201 does not always perform excellently.

To evaluate the performance of the friction-clutch system 201, it is necessary to consider the coefficient of friction of the friction surfaces, the amount of wear of the friction surfaces, and whether the torque fluctuations are within a predetermined range. Particularly, the torque fluctuations causes judders (vibrations) on the friction-clutch system 201. The judders (vibrations) interrupt smoothly transmitting the power.

Thus, these properties should comply with the requirements in a wide range of the power to be transmitted.

From recent research on the friction-clutch system 201, it was found that there is a close correlation among the magnitude of the coefficient of friction of the friction surfaces, the amount of the wear of the friction surfaces, the magnitude of the torque fluctuations, the magnitude of the power to be transferred, and the ratio of [the area of the friction surface made from the metal/ceramics material]/[the area of the friction surface made from the metal/ceramics material+ the area of the friction surface made from the carbon/graphite material].

To clarify these facts, the following tests were conducted.

The ratio of the friction surface (a) and the magnitude of the power to be transmitted (it corresponds to the pressure of the friction surfaces) were selected as parameters. The tests for transmitting the power by the friction-clutch system 201 were conducted to evaluate the magnitude of the coefficient of friction of the friction surfaces, the amount of the wear of the friction surfaces, and the magnitude of the torque fluctuations. In the test, the ratio of the friction surface (a) is defined as the ratio of [the area of the friction surface made from the metal/ceramics material]/[the area of the friction surface made from the metal/ceramics material + the area of the friction surface made from the carbon/graphite material].

Below, the method of the tests and the results of the tests are explained in detail.

Examples 101-110

A C/C composite material as the carbon/graphite material and steel as the metal/ceramics material are used. After changing the ratio of the friction surface (a) from 3% to 75%, ten samples of the friction disk unit 213, which corresponds to examples 101-110, were manufactured. Table 1 shows the constitution of the materials of examples 101-110 of the friction disk unit, which examples were used for the tests.
[Table 1]

Table 1: Constitution of the materials of the friction disk unit used for the tests (No. 1)

|  | Type of carbon/graphite material | Type of metal/ceramics material | The ratio of the friction surface (a) (%) |
|---|---|---|---|
| Example 101 | C/C composite material | Steel | 3 |
| Example 102 | " | " | 5 |
| Example 103 | " | " | 10 |
| Example 104 | " | " | 20 |
| Example 105 | " | " | 40 |
| Example 106 | " | " | 50 |
| Example 107 | " | " | 60 |
| Example 108 | " | " | 65 |
| Example 109 | " | " | 70 |
| Example 110 | " | " | 75 |

Examples 201-210

A C/C composite material as the carbon/graphite material and a brass as the metal/ceramics material were used. By changing the ratio of the friction surface (a) from 3% to 75%, ten samples of the friction disk unit 213, which corresponds to examples 201-210, were manufactured. Table 2 shows the constitution of the materials of examples 201-210 of the friction disk unit, which examples were used for the tests.
[Table 2]

Table 2: Constitution of the materials of the friction disk unit used for the tests (No. 2)

|  | Type of carbon/graphite material | Type of metal/ceramics material | The ratio of the friction surface (a) (%) |
|---|---|---|---|
| Example 201 | C/C composite material | Brass | 3 |
| Example 202 | " | " | 5 |
| Example 203 | " | " | 10 |
| Example 204 | " | " | 20 |
| Example 205 | " | " | 40 |
| Example 206 | " | " | 50 |
| Example 207 | " | " | 60 |
| Example 208 | " | " | 65 |
| Example 209 | " | " | 70 |
| Example 210 | " | " | 75 |

Examples 301-310

A C/C composite material as the carbon/graphite material and a copper as the metal/ceramics material are used. After changing the ratio of the friction surface (a) from 3% to 75%, ten samples of the friction disk unit 213, which corresponds to examples 301-310, were manufactured. Table 3 shows the constitution of the materials of examples 301-310 of the friction disk unit, which examples were used for the tests.
[Table 3]

Table 3: Constitution of the materials of the friction disk unit used for the tests (No. 3)

|  | Type of carbon/graphite material | Type of metal/ceramics material | The ratio of the friction surface (a) (%) |
|---|---|---|---|
| Example 301 | C/C composite material | Copper | 3 |
| Example 302 | " | " | 5 |
| Example 303 | " | " | 10 |
| Example 304 | " | " | 20 |
| Example 305 | " | " | 40 |
| Example 306 | " | " | 50 |
| Example 307 | " | " | 60 |
| Example 308 | " | " | 65 |
| Example 309 | " | " | 70 |
| Example 310 | " | " | 75 |

Below, the data on the friction disk unit used for the tests is explained.

Configuration of the friction disk unit: See Figs. 2, 3, and 5.
Shape of the friction plates: A sector-form shape (which is made by dividing the friction disk having a circular ring shape into three parts)
Diameter of the outer side of the friction plates: 240 mm
Diameter of the inner side of the friction plates: 160 mm
Thickness of the friction disk: 7.8 mm

Test

The test for transmitting the power by using the Examples of the friction disk unit explained in the above paragraphs was conducted.
Below, the conditions of the tests are explained.
Temperature of the friction plates when the tests start:

Room temperature
Mechanical work performed during each operation of the friction-clutch system: 8.8 Kcal
Pressure of the friction surfaces: 5~300 N/cm$^2$

Under the conditions explained above, the tests were conducted, and the magnitude of the coefficient of friction of the friction surfaces, the amount of the wear of the friction surfaces, and the magnitude of the torque fluctuations, were measured.
The measurements are defined as follows:
The magnitude of the coefficient ($\mu$) of friction of the friction surfaces is determined by the following equation:

$$\mu = T/(2 \times P \times R)$$

where T is thethetorque to be transferred, P is a load to press the friction surfaces, and R is the effective radius of the friction plates.
The amount of the wear of the friction surfaces, which is defined as a rate of wear, is determined as an amount of change in the thicknesses of the friction plates when the friction-clutch system is operated one time (the mechanical work: 8.8 Kcal). Thus, the unit of the rate of wear is $10^{-3}$ mm/one operation.

The magnitude of the torque fluctuations is determined based on the characteristic curve of the torque obtained by the results of the tests for transmitting the power. It is defined as a vibrational component of the torque. It is determined by eliminating the transitional component of the vibration of the torque caused in the tests for transmitting the power. The unit of the torque fluctuations is given in kgm.

Table 4 shows the coefficient of friction, the rate of the wear, and the torque fluctuations that were obtained by the tests using Examples 101-110 in relation to the pressure on the friction surfaces.

[Table 4]

(See Table 4)

Table 5 shows the coefficient of friction, the rate of the wear, and the torque fluctuations that were obtained by the tests using Examples 201-210 in relation to the pressure on the friction surfaces.

[Table 5]

(See Table 5)

Table 6 shows the coefficient of friction, the rate of the wear, and the torque fluctuations that were obtained by the tests using Examples 301-310 in relation to the pressure on the friction surfaces.

[Table 6]

(See Table 6)

Generally, for the friction-clutch system and for the friction disk unit, it is preferable, for example, that the coefficient of friction be more than 0.2, that the rate of the wear be less than $1.5 \times 10^{-3}$ mm/one operation, and that the torque fluctuations be less than 40 Kgm.

Thus, from Tables 4, 5, and 6, the following conclusions were obtained.

It was found that a friction-clutch system having a preferable performance can be provided by setting the properties of the friction disk unit as follows:

(1) The ratio of the friction surface (a), namely, the ratio of [the area of the friction surface made from the metal/ceramics material]/[the area of the friction surface made from the metal/ceramics material + the area of the friction surface made from the carbon/graphite material] is as follows: 0.05~0.65
(2) While the power is being transmitted, the pressure between the first and the third friction surface and between the second and the fourth friction surface is as follows: 10~250 N/cm$^2$

Further, it was found that a friction-clutch system having a more preferable performance can be provided by setting the properties of the friction disk unit as follows:

(1) The ratio of the friction surface (a), namely, the ratio of [the area of the friction surface made from the metal/ceramics material]/[the area of the friction surface made from the metal/ceramics material + the area of the friction surface made from the carbon/graphite material] is as follows: 0.05~0.40
(2) While the power is being transmitted, the pressure between the first and the third friction surface and between the second and the fourth friction surface is as follows: 10~200 N/cm$^2$

Further, it was found that the friction disk unit having a preferable performance can be provided by setting the ratio of the friction disk unit as follows:

The ratio of the friction surface (a), namely, the ratio of [the area of the friction surface made from the metal/ceramics material]/[the area of the friction surface made from the metal/ceramics material + the area of the friction surface made from the carbon/graphite material] is as follows: 0.05~0.65

Further, it was found that the friction disk unit having more preferable performance can be provided by setting the ratio of the friction disk unit as follows:

The ratio of the friction surface (a), namely, the ratio of [the area of the friction surface made from the metal/ceramics material]/[the area of the friction surface made from the metal/ceramics material + the area of the friction surface made from the carbon/graphite material] is as follows:
0.05~0.40

Explanation of Denotations

201    a friction-clutch system
203    a flywheel
205    a central hub
207    a clutch cover
211    a friction disk
213    a friction disk unit
215    a pressure plate
217    a diaphragm spring
219    rivets
221    a first friction plate
222    a second friction plate
223    a central plate
224    a first friction bush
225    a second friction bush
226    shearing pins

Table 4 Results of the tests for evaluating the performance of the friction-clutch system

| | Pressure of the friction surfaces ($N/cm^2$) | 5 | 10 | 25 | 100 | 150 | 200 | 250 | 300 |
|---|---|---|---|---|---|---|---|---|---|
| Example 101 | Coefficient of friction | 0.15 | | | 0.15 | | 0.11 | | 0.1 |
| | Rate of wear | 0.8 | | | 0.99 | | 1.23 | | 1.69 |
| | Torque fluctuations | 15 | | | 39 | | 34 | | 51 |
| Example 102 | Coefficient of friction | | 0.26 | | 0.31 | | 0.32 | 0.3 | |
| | Rate of wear | | 0.84 | | 0.89 | | 0.88 | 1.23 | |
| | Torque fluctuations | | 4 | | 7 | | 8 | 19 | |
| Example 103 | Coefficient of friction | 0.16 | | 0.32 | | 0.34 | | | 0.18 |
| | Rate of wear | 0.61 | | 0.69 | | 0.79 | | | 1.55 |
| | Torque fluctuations | 5 | | 4 | | 6 | | | 48 |
| Example 104 | Coefficient of friction | 0.19 | 0.27 | | 0.31 | 0.41 | | 0.29 | |
| | Rate of wear | 0.4 | 0.49 | | 0.63 | 0.8 | | 1.21 | |
| | Torque fluctuations | 4 | 5 | | 4 | 8 | | 13 | |
| Example 105 | Coefficient of friction | | 0.29 | | 0.36 | | 0.37 | 0.3 | 0.24 |
| | Rate of wear | | 0.63 | | 0.77 | | 0.79 | 0.98 | 1.69 |
| | Torque fluctuations | | 5 | | 6 | | 8 | 15 | 22 |
| Example 106 | Coefficient of friction | 0.14 | | 0.24 | 0.31 | | | 0.29 | |
| | Rate of wear | 0.67 | | 0.93 | 1.06 | | | 1.48 | |
| | Torque fluctuations | 12 | | 12 | 8 | | | 14 | |
| Example 107 | Coefficient of friction | | 0.21 | | | 0.29 | 0.22 | | 0.21 |
| | Rate of wear | | 0.94 | | | 0.99 | 1.07 | | 1.88 |
| | Torque fluctuations | | 11 | | | 8 | 18 | | 28 |
| Example 108 | Coefficient of friction | | 0.23 | | 0.29 | 0.36 | | 0.29 | |
| | Rate of wear | | 1 | | 1.43 | 1.22 | | 1.43 | |
| | Torque fluctuations | | 28 | | 31 | 38 | | 36 | |

(continued)

|  | Pressure of the friction surfaces (N/cm$^2$) | 5 | 10 | 25 | 100 | 150 | 200 | 250 | 300 |
|---|---|---|---|---|---|---|---|---|---|
| Example 109 | Coefficient of friction | 0.15 | 0.24 | | 0.33 | | 0.34 | | 0.21 |
| | Rate of wear | 1.19 | 1.33 | | 1.48 | | 1.89 | | 2.09 |
| | Torque fluctuations | 46 | 45 | | 47 | | 55 | | 61 |
| Example 110 | Coefficient of friction | | | 0.22 | 0.32 | 0.34 | | 0.22 | |
| | Rate of wear | | | 1.6 | 1.58 | 1.81 | | 2.16 | |
| | Torque fluctuations | | | 59 | 66 | 51 | | 78 | |

Table 5 Results of the tests for evaluating the performance of the friction-clutch system

|  | Pressure of the friction surfaces (N/cm$^2$) | 5 | 10 | 25 | 100 | 150 | 200 | 250 | 300 |
|---|---|---|---|---|---|---|---|---|---|
| Example 201 | Coefficient of friction | | 0.12 | | 0.16 | | | 0.1 | 0.18 |
| | Rate of wear | | 0.91 | | 1.12 | | | 1.36 | 1.73 |
| | Torque fluctuations | | 28 | | 41 | | | 43 | 45 |
| Example 202 | Coefficient of friction | | 0.28 | | | 0.25 | | 0.29 | |
| | Rate of wear | | 0.74 | | | 0.92 | | 1.15 | |
| | Torque fluctuations | | 5 | | | 5 | | 20 | |
| Example 203 | Coefficient of friction | 0.18 | 0.26 | | 0.38 | | 0.31 | | |
| | Rate of wear | 0.66 | 0.6 | | 0.77 | | 0.96 | | |
| | Torque fluctuations | 5 | 3 | | 4 | | 7 | | |
| Example 204 | Coefficient of friction | | 0.28 | 0.36 | | | 0.38 | 0.31 | 0.29 |
| | Rate of wear | | 0.55 | 0.48 | | | 0.81 | 1.15 | 1.48 |
| | Torque fluctuations | | 8 | 6 | | | 9 | 17 | 48 |
| Example 205 | Coefficient of friction | 0.17 | 0.27 | | 0.33 | | 0.36 | | 0.31 |
| | Rate of wear | 0.69 | 0.59 | | 0.69 | | 0.77 | | 1.91 |
| | Torque fluctuations | 8 | 7 | | 9 | | 9 | | 29 |
| Example 206 | Coefficient of friction | 0.14 | | | 0.29 | 0.38 | | 0.28 | |
| | Rate of wear | 0.67 | | | 1.12 | 0.99 | | 1.36 | |
| | Torque fluctuations | 12 | | | 6 | 10 | | 16 | |
| Example 207 | Coefficient of friction | | 0.23 | | 0.31 | | 0.28 | 0.27 | |
| | Rate of wear | | 1.22 | | 0.79 | | 1.21 | 1.39 | |
| | Torque fluctuations | | 13 | | 18 | | 17 | 13 | |
| Example 208 | Coefficient of friction | 0.16 | 0.22 | 0.21 | | | 0.24 | 0.28 | 0.24 |
| | Rate of wear | 0.93 | 1.18 | 1.26 | | | 1.44 | 1.41 | 2.06 |
| | Torque fluctuations | 23 | 22 | 25 | | | 29 | 39 | 51 |
| Example 209 | Coefficient of friction | | 0.21 | | 0.31 | | 0.33 | 0.26 | |
| | Rate of wear | | 1.39 | | 1.44 | | 1.99 | 1.78 | |
| | Torque fluctuations | | 48 | | 52 | | 45 | 58 | |

(continued)

| | Pressure of the friction surfaces (N/cm²) | 5 | 10 | 25 | 100 | 150 | 200 | 250 | 300 |
|---|---|---|---|---|---|---|---|---|---|
| Example 210 | Coefficient of friction | 0.16 | | 0.24 | | 0.29 | | 0.26 | |
| | Rate of wear | 1.4 | | 1.73 | | 1.94 | | 2.23 | |
| | Torque fluctuations | 53 | | 52 | | 66 | | 69 | |

Table 6 Results of the tests for evaluating the performance of the friction-clutch system

| | Pressure of the friction surfaces (N/cm²) | 5 | 10 | 25 | 100 | 150 | 200 | 250 | 300 |
|---|---|---|---|---|---|---|---|---|---|
| Example 301 | Coefficient of friction | | | 0.13 | | | 0.12 | | 0.11 |
| | Rate of wear | | | 0.83 | | | 1.02 | | 1.21 |
| | Torque fluctuations | | | 28 | | | 22 | | 33 |
| Example 302 | Coefficient of friction | 0.17 | 0.25 | | 0.29 | | 0.26 | 0.33 | 0.29 |
| | Rate of wear | 0.75 | 0.98 | | 0.68 | | 0.82 | 1.19 | 1.6 |
| | Torque fluctuations | 6 | 8 | | 9 | | 7 | 22 | 54 |
| Example 303 | Coefficient of friction | 0.15 | | 0.27 | | | 0.33 | 0.34 | |
| | Rate of wear | 0.77 | | 0.89 | | | 0.91 | 1.3 | |
| | Torque fluctuations | 8 | | 8 | | | 7 | 32 | |
| Example 304 | Coefficient of friction | | 0.26 | | 0.29 | | 0.33 | | |
| | Rate of wear | | 0.66 | | 0.88 | | 0.95 | | |
| | Torque fluctuations | | 6 | | 6 | | 9 | | |
| Example 305 | Coefficient of friction | 0.22 | | | 0.29 | | | 0.28 | 0.27 |
| | Rate of wear | 0.59 | | | 0.63 | | | 1.22 | 1.68 |
| | Torque fluctuations | 5 | | | 8 | | | 15 | 25 |
| Example 306 | Coefficient of friction | | 0.27 | 0.23 | | 0.29 | 0.33 | | 0.22 |
| | Rate of wear | | 0.69 | 0.88 | | 1.14 | 1.16 | | 1.71 |
| | Torque fluctuations | | 15 | 25 | | 29 | 19 | | 32 |
| Example 307 | Coefficient of friction | | 0.2 | 0.24 | | 0.22 | | 0.29 | |
| | Rate of wear | | 1.25 | 0.92 | | 1.35 | | 1.42 | |
| | Torque fluctuations | | 26 | 32 | | 19 | | 23 | |
| Example 308 | Coefficient of friction | 0.22 | 0.21 | | 0.29 | | | 0.26 | 0.22 |
| | Rate of wear | 0.88 | 1.12 | | 1.43 | | | 1.99 | 2.14 |
| | Torque fluctuations | 25 | 33 | | 31 | | | 39 | 62 |
| Example 309 | Coefficient of friction | | 0.22 | | 0.31 | | 0.32 | 0.29 | |
| | Rate of wear | | 1.43 | | 1.39 | | 1.76 | 1.91 | |
| | Torque fluctuations | | 43 | | 41 | | 48 | 45 | |
| Example 310 | Coefficient of friction | | 0.2 | | 0.31 | | 0.29 | 0.28 | |
| | Rate of wear | | 1.49 | | 1.68 | | 2.22 | 2.34 | |
| | Torque fluctuations | | 52 | | 49 | | 51 | 68 | |

**Claims**

1.  A friction-clutch system comprising:

    a flywheel rotated by an inputted power,
    a clutch cover attached to the flywheel, and
    a friction disk unit rotated together with the flywheel by being pressed toward the flywheel,
    wherein the clutch cover comprises a pressure plate for pressing the friction disk unit toward the flywheel and a spring for forcing the pressure plate against the friction disk unit,
    wherein the friction disk unit comprises a central hub for outputting the power transmitted from the flywheel and for being connected to the central portion of the friction disk unit, and friction disks for transmitting the rotational power by friction force and for being sandwiched between the flywheel and the pressure plate,
    wherein the friction disks have a first friction surface facing the flywheel and a second friction surface facing the pressure plate,
    wherein the flywheel has a third friction surface facing the first friction surface of the friction disks,
    wherein the pressure plate has a fourth friction surface facing the second friction surface of the friction disks,
    wherein at least one friction surface of the first to fourth friction surfaces is constituted of different materials comprised of a combination of a carbon/graphite material and a metal/ceramics material,
    wherein the carbon/graphite material forms a friction surface made from a carbon/graphite material, and a metal/ceramics material forms a friction surface made from a metal/ceramics material,
    wherein a ratio of [the area of the friction surface made from the metal/ceramics material]/[the area of the friction surface made from the metal/ceramics material + the area of the friction surface made from the carbon/graphite material] ranges from 0.05~0.65, and
    wherein pressure between the first and the third friction surface and between the second and the fourth friction surface is 10~250 N/cm$^2$ while the power is being transmitted.

2.  The friction-clutch system of claim 1,

    wherein the ratio of [the area of the friction surface made from the metal/ceramics material]/[the area of the friction surface made from the metal/ceramics material + the area of the friction surface made from the carbon/graphite material] ranges from 0.05~0.40, and
    wherein the pressure between the first and the third friction surface and between the second and the fourth friction surface is 10~200 N/cm$^2$ while the power is being transmitted.

3.  The friction-clutch system of either claim 1 or 2,

    wherein the first and the second friction surface is constituted of different materials comprised of a combination of a carbon/graphite material and a metal/ceramics material,
    wherein the carbon/graphite material forms a friction surface made from a carbon/graphite material, and a metal/ceramics material forms a friction surface made from a metal/ceramics material.

4.  The friction-clutch system of any one of claims 1-3,
    wherein the carbon/graphite material is a C/C composite material.

5.  The friction-clutch system of any one of claims 1-4,
    wherein the metal/ceramics material is a metal material selected from steel, brass, copper, aluminum, titanium, molybdenum, tungsten, tantalum, and alloys thereof, or a ceramics material selected from alumina, mullite, cordierite, zirconia, titanium oxide, silicon nitride, titanium nitride, aluminum nitride, silicon carbide, boron carbide, tungsten carbide, titanium boride, and sialon.

6.  The friction-clutch system of any one of claims 1-5,
    wherein the friction disks comprise a first friction plate, which forms the first friction surface, a second friction plate, which forms the second friction surface, and a central plate for fixing the first and the second friction plate.

7.  The friction-clutch system of claim 6,

    wherein the first and the second friction plate and the central plate all have an annular shape,
    wherein the first and the second friction plate are mechanically fixed to the central plate.

**8.** The friction-clutch system of claim 7,
wherein each of the first and the second friction plate and the central plate comprises a plurality of circumferentially-segmented plates.

**9.** The friction-clutch system of any one of claims 6-8,

wherein the first friction plate and the second friction plate are made from the carbon/graphite material, which forms a friction surface made from a carbon/graphite material, and
wherein fasteners for mechanically fixing the first and the second friction plate to the central plate are made from a metal/ceramics material, which forms a friction surface made from a metal/ceramics material.

**10.** The friction-clutch system of any one of claims 1-9,
wherein the friction surface made from a carbon/graphite material and the friction surface made from a metal/ceramics material form one plane.

**11.** A friction disk unit comprising:

a central hub for outputting the power transmitted from a flywheel and for being connected to the central portion of the friction disk unit, and friction disks for transmitting the rotational power by friction force,
wherein the friction disks have a first friction surface and a second friction surface,
wherein at least one friction surface of the first and the second friction surfaces is constituted of different materials comprised of a combination of a carbon/graphite material and a metal/ceramics material,
wherein the carbon/graphite material forms a friction surface made from a carbon/graphite, and a metal/ceramics material forms a friction surface made from a metal/ceramics material,
wherein a ratio of [the area of the friction surface made from the metal/ceramics material]/[the area of the friction surface made from the metal/ceramics material + the area of the friction surface made from the carbon/graphite material] ranges from 0.05~0.65.

**12.** The friction disk unit of claim 11,
wherein a ratio of [the area of the friction surface made from the metal/ceramics material]/[the area of the friction surface made from the metal/ceramics material + the area of the friction surface made from the carbon/graphite material] ranges from 0.05~0.40.

**13.** The friction disk unit of either claim 11 or 12,
wherein the carbon/graphite material is a C/C composite material.

**14.** The friction disk unit of any one of claims 11-13,
wherein the metal/ceramics material is a metal material selected from steel, brass, copper, aluminum, titanium, molybdenum, tungsten, tantalum, and alloys thereof, or a ceramics material selected from alumina, mullite, cordierite, zirconia, titanium oxide, silicon nitride, titanium nitride, aluminum nitride, silicon carbide, boron carbide, tungsten carbide, titanium boride, and sialon.

**15.** The friction disk unit of any one of claims 11-14,
wherein the friction disks comprise a first friction plate, which forms the first friction surface, a second friction plate, which forms the second friction surface, and a central plate for fixing the first and the second friction plate.

**16.** The friction disk unit of claim 15,

wherein the first and the second friction plate and the central plate all have an annular shape,
wherein the first and the second friction plate are mechanically fixed to the central plate.

**17.** The friction disk unit of claim 16,
wherein each of the first and the second friction plate and the central plate comprises a plurality of circumferentially segmented plates.

**18.** The friction disk unit of any one of claims 15-17,
wherein the first friction plate and the second friction plate are made from the carbon/graphite material, which forms a friction surface made from a carbon/graphite material, and

wherein fasteners for mechanically fixing the first and the second friction plate to the central plate are made from the metal/ceramics material, which forms a friction surface made from a metal/ceramics material.

19. The friction disk unit of any one of claims 11-18,
    wherein the friction surface made from a carbon/graphite material and the friction surface made from a metal/ceramics material form one plane.

Fig. 1

Fig. 2

Fig. 3    Enlarged View of Part A of Fig. 2

Fig. 4

Fig. 5

Fig. 5-3

Fig. 5-2

Fig. 6

<div align="center">

**INTERNATIONAL SEARCH REPORT**

</div>

| | International application No. |
|---|---|
| | PCT/JP2010/057884 |

| A. CLASSIFICATION OF SUBJECT MATTER |
|---|
| *F16D13/62*(2006.01)i |
| |
| |
| According to International Patent Classification (IPC) or to both national classification and IPC |

| B. FIELDS SEARCHED |
|---|
| Minimum documentation searched (classification system followed by classification symbols) |
| F16D13/62 |
| |
| |
| |
| Documentation searched other than minimum documentation to the extent that such documents are included in the fields searched |
| Jitsuyo Shinan Koho    1922-1996   Jitsuyo Shinan Toroku Koho   1996-2010 |
| Kokai Jitsuyo Shinan Koho   1971-2010   Toroku Jitsuyo Shinan Koho   1994-2010 |
| |
| Electronic data base consulted during the international search (name of data base and, where practicable, search terms used) |
| |
| |

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2009-97690 A  (Across Co., Ltd.), | 11-19 |
| Y | 07 May 2009 (07.05.2009), | 1-10 |
| | entire text; all drawings | |
| | (Family: none) | |
| | | |
| Y | JP 10-267051 A  (Honda Motor Co., Ltd., Across Co., Ltd.), | 1-10 |
| | 06 October 1998 (06.10.1998), | |
| | paragraphs [0013], [0038], [0040]; fig. 1 to 2 | |
| | & US 5975270 A      & EP 867634 A2 | |
| | | |
| Y | WO 2005/095812 A1  (Across Co., Ltd.), | 1-10 |
| | 13 October 2005 (13.10.2005), | |
| | paragraphs [0026], [0040]; fig. 1 to 3 | |
| | & JP 2005-291449 A   & US 2007/0205076 A1 | |
| | & EP 1731785 A1 | |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August, 2010 (02.08.10) | 17 August, 2010 (17.08.10) |

| Name and mailing address of the ISA/ | Authorized officer |
|---|---|
| Japanese Patent Office | |
| | |
| Facsimile No. | Telephone No. |

Form PCT/ISA/210 (second sheet) (July 2009)

**INTERNATIONAL SEARCH REPORT**

| International application No. |
| --- |
| PCT/JP2010/057884 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2006-37983 A  (Mazda Motor Corp.),<br>09 February 2006 (09.02.2006),<br>paragraphs [0026], [0031]; fig. 1<br>(Family: none) | 1-10 |
| A | JP 11-63007 A  (Exedy Corp.),<br>05 March 1999 (05.03.1999),<br>paragraphs [0005] to [0006], [0011] to [0013],<br>[0029], [0032]; fig. 1 to 11<br>(Family: none) | 11 |

Form PCT/ISA/210 (continuation of second sheet) (July 2009)

**EP 2 412 996 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002181072 A

- JP 2009097690 A